# EUROPÄISCHE PATENTSCHRIFT

(11) **EP 3 502 435 B1**
(45) Veröffentlichungstag und Bekanntmachung des Hinweises auf die Patenterteilung: **01.11.2023**
(21) Anmeldenummer: 18212872.8
(22) Anmeldetag: 17.12.2018
(51) Int. Cl.: F02B 31/00, F01L 13/00, F02D 13/02, F02D 13/06, F01L 1/053

(54) **BRENNKRAFTMASCHINE MIT VIER ZYLINDERN UND VERFAHREN ZUM BETREIBEN EINER SOLCHEN BRENNKRAFTMASCHINE**
COMBUSTION ENGINE WITH FOUR CYLINDERS AND METHOD FOR OPERATING SUCH A COMBUSTION ENGINE
MOTEUR À COMBUSTION INTERNE À QUATRE CYLINDRES ET PROCÉDÉ DE FONCTIONNEMENT D'UN TEL MOTEUR À COMBUSTION INTERNE

(30) Priorität: 21.12.2017 DE 102017130977
(43) Veröffentlichungstag der Anmeldung: 26.06.2019
(73) Patentinhaber: VOLKSWAGEN AKTIENGESELLSCHAFT, 38440 Wolfsburg (DE)
(72) Erfinder: Groenendijk, Axel, 38518 Gifhorn (DE)
(74) Vertreter: Freischem & Partner Patentanwälte mbB

(56) Entgegenhaltungen:
- EP-A1- 2 829 709
- WO-A1-2017/211574
- DE-A1-102012 003 491
- DE-A1-102012 004 419
- DE-A1-102013 222 820
- FR-A1- 3 106 857
- JP-A- 2014 163 315
- JP-B2- 4 420 706
- US-A1- 2017 248 043
- MIDDENDORF H ET AL: "DER 1,4-L-TSI-OTTOMOTOR MIT ZYLINDERABSCHALTUNG", MTZ - MOTORTECHNISCHE ZEITSCHRIFT, SPRINGER, vol. 73, no. 3, 1 March 2012 (2012-03-01), pages 186-193, XP001577940, ISSN: 0024-8525, DOI: 10.1365/S35146-012-0262-0

## Beschreibung

Die Erfindung betrifft eine Brennkraftmaschine mit vier Zylindern, wobei jedem Zylinder ein erstes Einlassventil und mindestens ein zweites Einlassventil zugeordnet ist und wobei zumindest einigen Einlassventilen ein erster Betätigungsnocken mit einer ersten Nockengeometrie und mindestens ein zweiter Betätigungsnocken mit einer zweiten Nockengeometrie zugeordnet ist, die bedarfsweise durch einen Verschiebemechanismus aktivierbar sind. Die Erfindung betrifft ferner ein Verfahren zum Betreiben einer solchen Brennkraftmaschine.

Aus DE 10 2010 025 100 A1 ist eine verstellbare Nockenwelle mit mindestens einer Welle und einem Nockenpaket bekannt. Das Nockenpaket weist dabei mindestens zwei unterschiedliche Nocken und/oder Nockenkonturen auf. Den ersten Einlassventilen und den zweiten Einlassventilen eines Zylinders sind dabei jeweils ein Nockenpaket und ein einzelner Nocken zugeordnet. Die zwei unterschiedlichen Nocken oder Nockenkonturen können bedarfsweise aktiviert werden, indem ein Schlitten, der drehbar, aber axial verschieblich auf der Nockenwelle gelagert ist, zu geeigneten Zeitpunkten mittels einer Verstellvorrichtung axial verschoben wird. Aktiv ist jeweils der Nocken bzw. die Nockenkontur, welche mit dem zugeordneten Ventil in Kontakt steht. Die Nocken oder Nockenkonturen sollen jeweils unterschiedliche Breiten aufweisen, um eine größere Möglichkeit an Zeitpunkten zum Verstellen der Nockenwelle zu erlauben und auch unterschiedliche Gruppierungen der Nocken von unterschiedlichen Ventilen bzw. Zylindern zu ermöglichen.

Aus der zum Anmeldetag noch unveröffentlichten DE 10 2017 207 917 A1 ist eine Brennkraftmaschine mit vier Zylindern bekannt, die einlassseitig jeweils einen Füllungskanal und einen als Verwirbelungskanal bezeichneten Drallkanal aufweist. Dabei sind jeweils zwei benachbarte Füllungskanäle mittels einer Verstellvorrichtung deaktivierbar, indem durch die Verstellvorrichtung jeweils ein dem Einlassventil des Füllungskanals zugeordneter Nullhubnocken aktiviert wird. Die Drallkanäle sind nicht deaktivierbar und auch nicht mit der Verstellvorrichtung gekoppelt.

Aus DE 10 2012 003491 A1 ist eine Kraftfahrzeugventiltriebverstellvorrichtung bekannt, wobei die Verstellvorrichtung eine Nockenwelle mit mindestens zwei axial verschiebbaren Nockenelementen umfasst. Die Nockenelemente weisen verschiedene Nockenspuren auf, mittels welchen Einlassventile betätigbar sein sollen. Jedem ersten Einlassventil und jedem zweiten Einlassventil sind dabei mindestens eine erste Nockenspur und eine zweite Nockenspur zugeordnet. Für den zweiten und dritten Zylinder sind zudem eine erste Nockenspur, eine zweite Nockenspur und eine dritte Nockenspur vorgesehen.

Aus US 2017/248043 A1 ist eine Nockenwellenanordnung bekannt, wobei jeweils einem Zylinder zwei Nockenpakete zugeordnet sind. Ein Nockenpaket weist dabei drei Nocken auf, welche unterschiedliche Nockengeometrien aufweisen. Die Nockenpakete sind mittels Aktuatoren verstellbar.

Aus WO 2017/211574 A1 ein Verfahren zum Betreiben einer Brennkraftmaschine bekannt. Die Brennkraftmaschine umfasst jeweils zwei Einlassventile pro Brennraum. Die Einlassventile werden mittels einer Nockenwelle und daran angeordneter Nockenpaare mit Nocken betätigt. Beiden Einlassventilen sind ein erster Nocken und ein zweiter Nocken zugeordnet. Zur Verstellung der Nocken ist ein Umschaltaktuator vorgesehen.

Aus DE 10 2013 222 820 A1 ist ein Ventiltrieb eines Verbrennungsmotors bekannt, wobei der Ventiltrieb eine Nockenwelle, insbesondere zur Betätigung von Einlassventilen, und zwei daran verschieblich angeordnete Nockenstücke umfasst. Die Nockenstücke weisen für jedes erste und für jedes zweite Einlassventil benachbarte Nocken mit unterschiedlichen Erhebungen auf. Dabei sollen die Nockenstücke jeweils genau drei Erhebungen aufweisen.

Aus DE 10 2012 004419 A1 ist eine Kraftfahrzeugventiltriebverstellvorrichtung bekannt, welche eine Nockenwelle aufweist. Auf der Nockenwelle sind Nockenelemente angeordnet. Eines der Nockenelemente weist dabei eine Nockenspur mit einem Ventilhub und eine Nockenspur mit einem Nullhub auf, wobei das andere der Nockenelemente eine Nockenspur mit einem ersten und einem zweiten Ventilhub aufweist.

Aus EP 2 829 709 A1 ist eine variable Ventilvorrichtung für eine Brennkraftmaschine bekannt, wobei die Brennkraftmaschine einen ersten Ansaugkanal in Form eines Füllungskanals und einen zweiten Ansaugkanal in Form eines Drallkanals aufweist. Der erste Ansaugkanal ist dabei mit einem ersten Einlassventil und der zweite Ansaugkanal mit einem zweiten Einlassventil verbunden.

In JP 2014 163315 A A ist eine spiegelbildliche Anordnung von Nockengeometrien gezeigt. Aus JP 4 420706 B2 ist eine Brennkraftmaschine mit zwei abschaltbaren Zylindern und zwei nicht abschaltbaren Zylindern bekannt, wobei die nicht abschaltbaren Zylinder einen Füllungskanal und einen Drallkanal aufweisen. Dabei ist das jeweilige dem Füllungskanal zugeordnete Einlassventil abschaltbar.

Aus Middendorf H. et al: "Der 1,4-L-TSI-Ottomotor mit Zylinderabschaltung", MTZ - Motortechnische Zeitschrift, Springer, Bd. 73, Nr. 3, 1. März 2021 (2012-03-01), Seiten 186-193, XP001577940, ISSN: 0024-8525, DOI: 10.1365/S35146-012-0262-0 ist eine Brennkraftmaschine mit vier Zylindern bekannt, wobei jeder Zylinder ein erstes Einlassventil und mindestens ein zweites Einlassventil aufweist, wobei zur Betätigung der ersten Einlassventile und der mindestens zweiten Einlassventile eine Einlassnockenwelle mit den Einlassventilen zugeordneten Betätigungsnocken vorgesehen ist, wobei zwei ersten Einlassventilen ein erster Betätigungsnocken mit einer ersten Nockengeometrie in Form eines Vollprofils und ein zweiter Betätigungsnocken mit einer zweiten Nockengeometrie in Form eines Nullhubnockens zugeordnet ist. Damit unterscheiden sich die erste Nockengeometrie und die zweite Nockengeometrie zumindest über einen Teil ihres Umfangs voneinander. Der erste Betätigungsnocken und der zweite Betätigungsnocken sind bedarfsweise mittels mindestens einer Ventiltriebverstellvorichtung durch relatives Verschieben gegenüber dem zugeordneten ersten Einlassventil in Axialrichtung der Einlassnockenwelle zur Betätigung des jeweiligen ersten Einlassventils aktivierbar. Dabei ist an genau zwei Zylindern dem zweiten Einlassventil ein erster Betätigungsnocken mit einer ersten Nockengeometrie und ein zweiter Betätigungsnocken mit einer zweiten Nockengeometrie zugeordnet, und an genau zwei Zylindern ist dem zweiten Einlassventil jeweils nur ein einzelner Betätigungsnocken zugeordnet.

Der Erfindung liegt die Aufgabe zugrunde, eine Brennkraftmaschine mit vier Zylindern und ein Verfahren zum Betreiben einer solchen Brennkraftmaschine zur Verfügung zu stellen, mittels welchen die Effizienz der Brennkraftmaschine durch die Art und Weise der Ventilsteuerung lastfallabhängig verbessert werden kann.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Eine erfindungsgemäße Brennkraftmaschine umfasst vier Zylinder, wobei jeder Zylinder ein erstes Einlassventil und mindestens ein zweites Einlassventil aufweist und wobei zur Betätigung der ersten Einlassventile und der mindestens zweiten Einlassventile eine Einlassnockenwelle mit den Einlassventilen zugeordneten Betätigungsnocken vorgesehen ist. Jedem ersten Einlassventil ist dabei ein erster Betätigungsnocken mit einer ersten Nockengeometrie und ein zweiter Betätigungsnocken mit einer zweiten Nockengeometrie zugeordnet, wobei sich die erste Nockengeometrie und die zweite Nockengeometrie zumindest über einen Teil ihres Umfangs voneinander unterscheiden. Der erste Betätigungsnocken und der zweite Betätigungsnocken sind bedarfsweise mittels mindestens einer Ventiltriebverstellvorrichtung durch relatives Verschieben gegenüber dem zugeordneten ersten Einlassventil in Axialrichtung der Einlassnockenwelle zur Betätigung des jeweiligen ersten Einlassventils aktivierbar. Zusätzlich ist an mindestens einem Zylinder dem zweiten Einlassventil ein erster Betätigungsnocken mit einer ersten Nockengeometrie und ein zweiter Betätigungsnocken mit einer zweiten Nockengeometrie zugeordnet, wobei sich die erste Nockengeometrie und die zweite Nockengeometrie zumindest über einen Teil ihres Umfangs voneinander unterscheiden. Auch hier sind der erste Betätigungsnocken und der zweite Betätigungsnocken bedarfsweise mittels mindestens einer Ventiltriebverstellvorrichtung durch relatives Verschieben gegenüber dem zugeordneten zweiten Einlassventil in Axialrichtung der Einlassnockenwelle zur Betätigung des zweiten Einlassventils aktivierbar, wobei
a) an genau zwei Zylindern dem zweiten Einlassventil ein erster Betätigungsnocken mit einer ersten Nockengeometrie und ein zweiter Betätigungsnocken mit einer zweiten Nockengeometrie zugeordnet ist
   und
b) an genau zwei Zylindern dem zweiten Einlassventil jeweils nur ein einzelner Betätigungsnocken zugeordnet ist.

Dabei ist die erste Nockengeometrie des ersten Betätigungsnockens derart gestaltet, dass bei einer Aktivierung des ersten Betätigungsnockens dieser an dem korrespondierenden Einlassventil einen Vollhub oder einen Teilhub bewirkt. Solche Nocken werden im Folgenden auch als Vollhubnocken bzw. Teilhubnocken bezeichnet. Die zweite Nockengeometrie des zweiten Betätigungsnockens ist ferner derart gestaltet, dass bei einer Aktivierung des zweiten Betätigungsnockens dieser einen Nullhub an dem korrespondierenden Einlassventil bewirkt. Mit einem Nullhub ist gemeint, dass das korrespondierende Einlassventil nicht oder nur in einem für den Prozess im Zylinder nicht relevanten Umfang bewegt wird. Das Einlassventil ist in diesem Fall abgeschaltet.

Hinsichtlich der Verschiebung der dem ersten Einlassventil oder dem zweiten Einlassventil zugeordneten ersten und zweiten Betätigungsnocken relativ zu dem ersten Einlassventil bzw. dem zweiten Einlassventil wird darauf hingewiesen, dass die ersten und zweiten Betätigungsnocken relativ zu der Einlassnockenwelle insbesondere drehfest, aber in Axialrichtung verschiebbar gegenüber der Einlassnockenwelle angeordnet sein können. Eine Aktivierung eines ersten oder zweiten Betätigungsnockens erfolgt in diesem Fall durch ein axiales Verschieben der Betätigungsnocken gegenüber der Einlassnockenwelle, wobei der erste Betätigungsnocken und der zweite Betätigungsnocken über einen gemeinsamen Winkelbereich in Umfangsrichtung betrachtet einer identische Außenkontur (z.B. einen gemeinsamen Grundkreisradius) aufweisen und in diesem Winkelbereich eine stufenfreie axiale Verschiebung erfolgen kann. Die Anordnung der Betätigungsnocken kann dabei insbesondere in der aus dem Stand der Technik bekannten Art und Weise auf einem Schlitten oder durch andere geeignete axial verschiebbare Lagerung der Betätigungsnocken gegenüber der Einlassnockenwelle realisiert sein. Die Umschaltung zwischen Betätigungsnocken kann alternativ auch auf andere geeignete Art und Weise erfolgen, beispielsweise durch axiale Verschiebung einer axial verschieblich gelagerten Nockenwelle oder eines Abschnitts einer axial verschieblich gelagerten Nockenwelle.

Als Ventiltriebverstellvorrichtung zur Verschiebung und Aktivierung von zwei oder mehr nebeneinander angeordneten Betätigungsnocken, die einem Einlassventil zugeordnet sind, ist insbesondere eine Kulisse mit einem Stellglied vorgesehen, wobei Kulisse und Stellglied in bekannter Art und Weise zusammenwirken, um eine axiale Verschiebung der Betätigungsnocken zu bewirken.

Mit der erfindungsgemäßen Brennkraftmaschine kann an sämtlichen Zylindern mindestens ein Einlassventil abgeschaltet und zusätzlich an mindestens einem Zylinder ein weiteres Einlassventil abgeschaltet werden, wenn jeweils einer der beiden Betätigungsnocken ein Nullhubnocken ist. Die beiden Einlassventile dieses einen Zylinders können so insbesondere für mindestens einen Arbeitszyklus eines Zylinders, d.h. bei einer Viertakt-Brennkraftmaschine für mindestens vier Takte, deaktiviert und somit abgeschaltet werden. Dazu wird für jedes der beiden Einlassventile der Betätigungsnocken mit Nockengeometrie aktiviert. Dies ermöglicht es, die der Brennkraftmaschine zugeführte Luft (Zuluft) bedarfsweise statt durch alle vier Zylinder nur durch drei Zylinder (oder bei geeigneter Weiterbildung auch durch weniger Zylinder) strömen zu lassen. Darüber hinaus kann bei den übrigen, nicht vollständig deaktivierten Einlassventilen zumindest eines der Einlassventile deaktiviert sein, um weiteren Einfluss auf die für die zugeführte Luft zur Verfügung stehenden Einströmmöglichkeiten in die Zylinder zu nehmen.

Die beschriebene Gestaltung einer erfindungsgemäßen Brennkraftmaschine eignet sich vor allem für einen Betrieb unter Teillast. Durch die vollständige Abschaltung mindestens eines Zylinders kann so im Teillastbetrieb der Kraftstoffverbrauch reduziert werden, indem nur in die verbleibenden aktiven Zylinder Kraftstoff eingespritzt und so ein effizienterer Betriebspunkt der Brennkraftmaschine realisierbar ist. Darüber hinaus positiv ist, dass durch den erhöhten Massenstrom die aktiven Zylinder besser ausgelastet werden und dadurch weniger auskühlen.

Erfindungsgemäß ist bei der erfindungsgemäßen Brennkraftmaschine an genau zwei Zylindern dem zweiten Einlassventil ein erster Betätigungsnocken mit einer ersten Nockengeometrie und ein zweiter Betätigungsnocken mit einer zweiten Nockengeometrie zugeordnet. In diesem Fall können insbesondere bei genau zwei Zylindern jeweils der Füllungskanal und der Drallkanal verschlossen, d.h. temporär vollständig deaktiviert werden. So lässt sich auf konstruktiv einfache Art und Weise ein temporärer Zwei-Zylinderbetrieb einer Brennkraftmaschine realisieren, insbesondere um einen effizienten Teillastbetrieb zu ermöglichen.

Die Brennkraftmaschine ist so ausgebildet, dass sich in einem 2-Zylinder-Betriebsmodus zwei Zylinder vollständig deaktivieren lassen, beispielsweise die beiden äußeren Zylinder einer Zylinderreihe, und gleichzeitig auf zwei weiteren Zylinder durch temporäres Deaktivieren der jeweiligen Füllungskanäle das Drallniveau erhöht werden kann. Die Brennkraftmaschine lässt sich dann entweder in einem 4-Zylinderbetrieb mit 4-Ventilbetrieb (2 Einlassventile und 2 Auslassventile; nachfolgend auch Normalbetrieb genannt) betreiben oder in dem vorstehend erläuterten 2-Zylinder-Betriebsmodus mit deaktivierten Einlass-Füllungskanal-Ventilen.

In der erfindungsgemäßen Brennkraftmaschine ist es vorgesehen, dass an genau zwei Zylindern dem zweiten Einlassventil jeweils nur ein einziger Betätigungsnocken zugeordnet ist. Bei einem solchen Betätigungsnocken handelt es sich insbesondere um einen in Axialrichtung der Einlassnockenwelle nicht verschiebbaren Betätigungsnocken, der drehfest und verschiebefest mit der Einlassnockenwelle verbunden ist. Alternativ kann es sich aber auch um einen verschiebbar gelagerten Betätigungsnocken handeln, der so breit ausgebildet ist, dass sich die wirksame Umfangskontur bei axialer Verschiebung nicht verändert. In diesem Fall kann der Betätigungsnocken mit anderen Einlassventilen zugeordneten Mehrfach-Betätigungsnocken funktional gekoppelt sein.

Aus Gründen der Einfachheit ist es bevorzugt, wenn es sich bei den vorstehend genannten Betätigungsnocken, die dem zweiten Einlassventil als einzige Betätigungsnocken zugeordnet sind, um drehfest und verschiebefest mit der Einlassnockenwelle verbundene Betätigungsnocken handelt, welche nicht mit einer Ventiltriebverstellvorrichtung gekoppelt sind. In der zuletzt erläuterten Ausführungsform kann bei den zwei Zylindern, deren jeweiligem zweiten Einlassventil nur ein einziger Betätigungsnocken zugeordnet ist, nur das erste Einlassventil deaktiviert werden. Es handelt sich bei diesem deaktivierbaren ersten Einlassventil um ein dem Füllungskanal des Zylinders zugeordnetes Einlassventil, so dass das dem Drallkanal zugeordnete Einlassventil nicht deaktivierbar ist. Eine derartige Gestaltung ist in Verbindung mit der vorstehend beschriebenen Anordnung vorteilhaft, bei welcher beide bzw. alle Einlassventile von zwei Zylindern vollständig deaktivierbar sind. In diesem Fall kann ein effizienter Teillastbetrieb stattfinden, indem bedarfsweise und temporär zwei Zylinder vollständig deaktiviert bzw. abgeschaltet werden und bei zwei Zylindern das Einströmen von Zuluft in den Brennraum nur über die Drallkanäle erfolgt.

Erfindungsgemäß sind die ersten Einlassventile jeweils einem Füllungskanal zugeordnet und die zweiten Einlassventile jeweils einem Drallkanal zugeordnet. Unter einem Füllungskanal wird dabei insbesondere derjenige Kanal für die Zuluft zum Brennraum eines Zylinders betrachtet, welcher gegenüber einem oder mehreren anderen Kanälen für die Zuluft einen erhöhten Durchfluss aufweist. Füllungskanäle sind insoweit vorzugsweise weitestgehend achsparallel zur jeweiligen Zylinderachse ausgerichtet bzw. die Strömungsrichtung aus einem Füllungskanal üblicherweise überwiegend in axialer Richtung der Zylinderachse orientiert bzw. die Strömungsrichtung ist zumindest stärker axial orientiert als bei Drallkanälen. Der Unterschied zwischen Füllungskanal und Drallkanal kann auch einfach daran festgemacht werden, dass Drallkanäle, die der Zuführung von Zuluft zu einem Zylinder dienen, eine erhöhte Drallzahl (Tumblezahl) aufweisen. Der Drallkanal kann insoweit auch als Tumblekanal oder Verwirbelungskanal bezeichnet werden. Drallkanäle sind häufig wendelförmig ausgebildet und münden weitestgehend senkrecht zur Zylinderachse des entsprechenden Zylinders in den Zylinder, in der Regel ungefähr tangential zur Zylinderwandfläche.

Mit einer Brennkraftmaschine, welche die oben genannte Zuordnung aufweist, können die Füllungskanäle aller Zylinder und zusätzlich der Drallkanal zweier Zylinder deaktiviert werden, so dass durch diese Kanäle keine Zuluft in den jeweiligen Brennraum gelangen kann. In den noch aktiven Zylindern ergibt sich dadurch eine Drallerhöhung der in den Brennraum einströmenden Zuluft, so dass die Abschaltung zweier Zylinder mit einer Drallerhöhung in den noch aktiven Zylindern kombiniert wird. Aufgrund der Drallerhöhung wird die die Durchmischung von Kraftstoff und Zuluft in den jeweils aktiven Zylindern verbessert. So können insbesondere bei niedrigen Drehzahlen der Schadstoffausstoß und der Kraftstoffverbrauch reduziert werden.

Ein weiterer Vorteil der Möglichkeit des Verschließens der Füllungskanäle über die ersten Einlassventile mittels der Betätigungsnocken ist, dass auf zusätzliche mechanische Bauteile in Form von Drallklappen ggf. verzichtet werden kann, insbesondere wenn durch die erfindungsgemäße Ausbildung bei einer Brennkraftmaschine bereits eine ausreichend große Drallerhöhung ohne zusätzliche Drallklappe bewirkt werden kann.

Eine besonders einfache Anordnung und somit eine kostengünstige Konstruktionsweise ergibt sich, wenn die benachbarten Einlassventile zweier Zylinder, insbesondere die diesen Einlassventilen zugeordneten Betätigungsnocken, mittels einer gemeinsam genutzten Ventiltriebverstellvorrichtung in axialer Richtung der Einlassnockenwelle verstellbar sind. Die jeweiligen Betätigungsnocken sind dazu insbesondere über ein gemeinsames Schiebeelement funktional oder unmittelbar miteinander verbunden.

Vorzugsweise erfolgt die Anordnung von entsprechenden Ventiltriebverstellvorrichtungen derart, dass jeweils zwei erste Einlassventile gemeinsam verstellt werden können, d.h. zum Beispiel jeweils die ersten Einlassventile eines ersten Zylinders und eines zweiten Zylinders. Wenn die ersten Einlassventile des ersten Zylinders und des zweiten Zylinders in diesem Fall unmittelbar benachbart zueinander angeordnet sind, kann die gemeinsame Betätigung über ein kompakt gestaltetes und ein entsprechend nur geringes Gewicht aufweisendes Schiebeelement erfolgen.

Alternativ oder in Ergänzung dazu können die ersten Einlassventile des dritten Zylinders und des vierten Zylinders benachbart angeordnet sein, insbesondere wenn alle Zylinder in einer Zylinderreihe angeordnet sind. Die Zahl der benötigten Ventiltriebverstellvorrichtungen kann so trotz einer hohen Funktionalität gering gehalten werden. Insbesondere kann darauf verzichtet werden, für jeden Zylinder eine eigene Ventiltriebverstellvorrichtung vorzusehen. Zusammenfassend kann eine erfindungsgemäße Brennkraftmaschine mit vier Zylindern mit drei oder weniger Ventiltriebverstellvorrichtungen realisiert werden, wodurch die Kosten sowie der Konstruktions- und Steuerungsaufwand gering gehalten werden.

Eine erfindungsgemäße Brennkraftmaschine lässt sich auch konstruktiv einfach realisieren, wenn an zwei Zylindern, welche sowohl für das erste Einlassventil einen verstellbaren Betätigungsnocken als auch für das zweite Einlassventil einen verstellbaren Betätigungsnocken aufweisen, die Betätigungsnocken für das erste Einlassventil und das zweite Einlassventil derart gekoppelt sind, dass die Betätigungsnocken mittels einer gemeinsam genutzten Ventiltriebverstellvorrichtung in Axialrichtung der Einlassnockenwelle verschiebbar sind. Die Betätigungsnocken für das erste Einlassventil und für das zweite Einlassventil sind dazu insbesondere über ein gemeinsames Schiebeelement verbunden. Ein solches Schiebeelement kann einstückig oder mehrteilig ausgebildet sein.

Mit besonders wenigen Ventiltriebverstellvorrichtungen kann eine erfindungsgemäße Brennkraftmaschine realisiert werden, wenn an dem Zylinder, welcher sowohl für das erste Einlassventil einen verstellbaren Betätigungsnocken als auch für das zweite Einlassventil einen verstellbaren Betätigungsnocken aufweist, die Betätigungsnocken für das erste Einlassventil und das zweite Einlassventil derart gekoppelt sind, dass die Betätigungsnocken mittels einer gemeinsam genutzten Ventiltriebverstellvorrichtung in Axialrichtung verschiebbar sind und diese Betätigungsnocken zusätzlich mit einem weiteren verstellbaren Betätigungsnocken eines weiteren, insbesondere eines benachbarten, Zylinders verstellbar sind. In diesem Fall wird eine Ventiltriebverstellvorrichtung zur gleichzeitigen Verstellung von Betätigungsnocken an drei unterschiedlichen Einlassventilen eingesetzt. Beispielsweise können die dem ersten Einlassventil zugeordneten Betätigungsnocken des ersten Zylinders gemeinsam mit den dem ersten Einlassventil und dem zweiten Einlassventil zugeordneten Betätigungsnocken des zweiten Zylinders mittels einer einzigen Ventiltriebverstellvorrichtung verstellbar ausgebildet sein. In diesem Fall kann damit die Anzahl von für eine erfindungsgemäße Brennkraftmaschine benötigte Ventiltriebverstellvorrichtungen auf zwei reduziert werden.

In einer weiteren praktischen Ausführungsform sind die vier Zylinder in einer Zylinderreihe angeordnet, wobei der erste Zylinder und der zweite Zylinder eine erste Funktionseinheit bilden und der dritte Zylinder und der vierte Zylinder eine zweite Funktionseinheit bilden. Die zu einer Funktionseinheit gehörenden, verstellbaren Betätigungsnocken sind dabei allesamt über eine einzige Ventiltriebverstellvorrichtung verstellbar ausgebildet. Die Anordnung von verschiebbaren Betätigungsnocken und eines einzelnen Betätigungsnockens der ersten Funktionseinheit erfolgt dabei vorzugsweise spiegelbildlich zu der Anordnung von verschiebbaren Betätigungsnocken und eines einzelnen Betätigungsnockens der zweiten Funktionseinheit. Die genannte, spiegelbildliche Anordnung umfasst vorzugsweise auch die Gängigkeit der wendelförmig ausgebildeten Drallkanäle, so dass die Drallkanäle der ersten Funktionseinheit beispielsweise eine links gerichtete Gängigkeit aufweisen und die Drallkanäle der zweiten Funktionseinheit eine rechts gerichtete Gängigkeit aufweisen oder umgekehrt.

Insbesondere in Kombination mit der vorstehend beschriebenen spiegelbildlichen Anordnung ergeben sich weitere Vorteile, wenn mindestens einem Einlassventil ein dritter Betätigungsnocken mit einer dritten Nockengeometrie zugeordnet ist. Insbesondere kann die dritte Nockengeometrie dabei zu der ersten Nockengeometrie identisch ausgebildet sein. Es kann auch mehreren der Einlassventile oder allen Einlassventilen ein dritter Betätigungsnocken zugeordnet sein, insbesondere solchen Einlassventilen, denen in der Basiskonfiguration gemäß Anspruch 1 ein erster Betätigungsnocken und mindestens ein zweiter Betätigungsnocken zugeordnet ist. So kann mit nur zwei Ventiltriebverstellvorrichtungen eine hohe funktionale Variabilität erzielt werden, die insbesondere zur Erzielung eines effizienten Teillastbetriebes einer Brennkraftmaschine nutzbar ist.

Bei den dritten Betätigungsnocken handelt es sich vorzugsweise um Teilhubnocken oder Vollhubnocken. Vorzugsweise ist in dem Fall, dass einem Einlassventil drei Betätigungsnocken zugeordnet sind, nur ein Nullhubnocken vorgesehen. Dieser kann insbesondere mittig zwischen einem Vollhubnocken bzw. einem Teilhubnocken, zwischen zwei Teilhubnocken oder zwischen zwei Vollhubnocken angeordnet sein. Es ist aber ebenfalls möglich, nur einen Nullhubnocken vorzusehen, der außenseitig angeordnet ist.

Es wird darauf hingewiesen, dass eine erfindungsgemäße Brennkraftmaschine auch an einem oder mehreren Einlassventilen eines Zylinders oder mehrerer Zylinder drei oder mehr Betätigungsnocken aufweisen kann.

Eine solche Brennkraftmaschine kann insbesondere so gestaltet sein, dass eine Einzelventilabschaltung auf einem oder mehreren Zylindern möglich ist, insbesondere derart, dass durch temporäres Abschalten von einem Füllungskanal das Drallniveau auf einem Zylinder oder durch temporäres Abschalten von mehreren Füllungskanal das Drallniveau auf diesen mehreren Zylindern temporär erhöht werden kann.

Alternativ oder in Ergänzung kann eine solche Brennkraftmaschine derart gestaltet sein, dass neben einem Normalbetrieb ein 2-Zylinderbetrieb mit zwei vollständig abgeschalteten Zylindern und jeweils zwei mit Standardhub betätigten Einlassventilen sowie ein 2-Zylinderbetrieb mit erhöhtem Drallniveau durch temporäres Abschalten der den Füllungskanälen zugeordneten Einlassventile an den zwei aktiven Zylindern möglich ist.

In einer weiteren praktischen Ausführungsform sind für mindestens einen Zylinder ein diesem Zylinder zugeordneter Drallkanal und ein diesem Zylinder zugeordneter Füllungskanal unmittelbar ausgehend von einem Saugrohr als separate Kanäle ausgebildet. Die in dem jeweiligen Kanal zurückgelegte Weglänge der Zuluft ist dann besonders lang, wodurch sich insbesondere ein effizienterer und/oder besser auslegbarer Drall einstellen bzw. erzeugen lässt.

Alternativ oder in Ergänzung dazu sind der einem Zylinder zugeordnete Drallkanal und der dem Zylinder zugeordnete Füllungskanal ausgehend von dem Saugrohr als gemeinsamer Kanal ausgebildet und zweigen erst stromabwärts des Saugrohrs, insbesondere erst unmittelbar vor dem Zylinder, in kürzere separate Kanäle ab. In diesem Fall kann das Saugrohr näher an dem Zylinder angeordnet werden, beispielsweise um eine kompakt bauende Brennkraftmaschine zu realisieren.

Die Erfindung betrifft auch ein Verfahren zum Betreiben einer wie vorstehend beschriebenen Brennkraftmaschine, wobei das erste Einlassventil mindestens eines Zylinders und das erste Einlassventil und das zweite Einlassventil mindestens eines anderen Zylinders zumindest in bestimmten Betriebsphasen der Brennkraftmaschine geschlossen werden. Vorzugsweise werden zwei Zylinder jeweils ganz abgeschaltet und an zwei Zylindern wird jeweils nur der Füllungskanal geschlossen, so dass sich in den noch aktiven Zylindern insgesamt ein höherer Durchfluss und eine Drallerhöhung ergeben.

Ein derartiges Verfahren wird insbesondere in Betriebsphasen der Brennkraftmaschine eingesetzt, in welchen die Brennkraftmaschine in Teillast - insbesondere unter 30% bis 50% Last der Maximallast - betrieben wird und/oder in welchen der Mitteldruck kleiner als 7 bar und insbesondere kleiner als 5 bar, kleiner als 4,5 bar oder kleiner als 4 bar ist. Das Verfahren kann auch erst bei einem Mitteldruck von maximal 3,5 bar oder maximal 3 bar eingesetzt werden. Nur in die noch verbleibenden aktiven Zylinder wird Kraftstoff eingespritzt, so dass in diesen Teillastfällen der Kraftstoffverbrauch reduziert wird. Zudem wird den aktiven Zylindern ein höherer Massenstrom an Zuluft zugeführt, so dass diese jeweils eine höhere Temperatur halten können, als wenn alle vier Zylinder betrieben werden. Bei einem Dieselmotor wird das Verfahren vorzugsweise auch dann eingesetzt, wenn der λ-Wert des Abgases größer als 1 ist und somit ein Luftüberschuss herrscht.

Ein Ausführungsbeispiel einer Ausführungsform der Erfindung ist nachfolgend im Zusammenhang mit der Zeichnung beschrieben. Es zeigt:

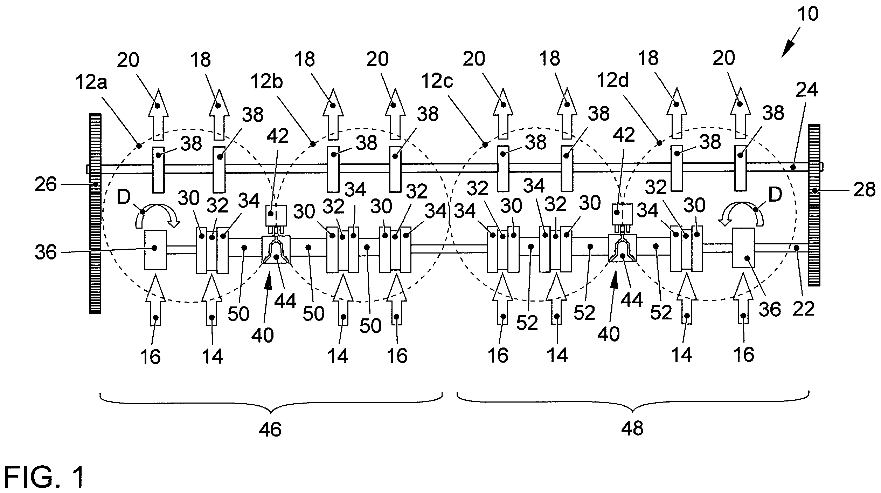

- Fig. 1: eine schematische Darstellung einer erfindungsgemäßen Brennkraftmaschine mit vier Zylindern.

In Fig. 1 ist eine Brennkraftmaschine 10 mit vier Zylindern 12a, 12b, 12c, 12d dargestellt, wobei die vier Zylinder 12a, 12b, 12c, 12d in dem Ausführungsbeispiel in einer Zylinderreihe angeordnet sind. Jedem Zylinder 12a, 12b, 12c, 12d sind ein erstes Einlassventil 14 und ein zweites Einlassventil 16 sowie ein erstes Auslassventil 18 und ein zweites Auslassventil 20 zugeordnet. Die Einlassventile 14, 16 und die Auslassventile 18, 20 sind in den Figuren schematisch durch einfache Pfeile dargestellt. Die ersten Einlassventile 14 sind jeweils einem Füllungskanal (nicht dargestellt) zugeordnet und die zweiten Einlassventile 16 sind jeweils einem Drallkanal (nicht dargestellt) zugeordnet.

Zur Betätigung der ersten Einlassventile 14 und der zweiten Einlassventile 16 in der Zylinderreihe ist eine Einlassnockenwelle 22 vorgesehen. Zur Betätigung der ersten Auslassventile 18 und der zweiten Auslassventile 20 in der Zylinderreihe ist eine Auslassnockenwelle 24 vorgesehen. Die Auslassnockenwelle 24 erstreckt sich in Axialrichtung zwischen einem von einer nicht dargestellten Kurbelwelle angetriebenen Antriebsrad 26 und einem Koppelrad 28, welches die parallel zur Auslassnockenwelle 24 angeordnete Einlassnockenwelle 22 antreibt.

Den jeweils ersten Einlassventilen 14 sämtlicher Zylinder 12a, 12b, 12c, 12d sind ein erster Betätigungsnocken 30 mit einer ersten Nockengeometrie, ein zweiter Betätigungsnocken 32 mit einer zweiten Nockengeometrie und in diesem Ausführungsbeispiel auch ein dritter Betätigungsnocken 34 mit einer dritten Nockengeometrie zugeordnet. An dem zweiten Zylinder 12b und dem dritten Zylinder 12c in der Zylinderreihe ist zusätzlich auch dem zweiten Einlassventil 16 ein erster Betätigungsnocken 30 mit einer ersten Nockengeometrie, ein zweiter Betätigungsnocken 32 mit einer zweiten Nockengeometrie und ein dritter Betätigungsnocken 34 mit einer dritten Nockengeometrie zugeordnet. Vorliegend sind der erste Betätigungsnocken 30, der zweite Betätigungsnocken 32 und der dritte Betätigungsnocken 34 jeweils einstückig ausgebildet und gegenüber der Einlassnockenwelle 22 verschiebbar ausgebildet.

In dem dargestellten Ausführungsbeispiel sind die erste Nockengeometrie und die dritte Nockengeometrie über den Umfang betrachtet identisch ausgebildet und dazu ausgebildet einen Vollhub an dem jeweiligen Einlassventil 14, 16 zu bewirken, d.h. es handelt sich bei dem ersten Betätigungsnocken 30 und bei dem dritten Betätigungsnocken 34 jeweils um Vollhubnocken. Die zweite Nockengeometrie ist zu der ersten Nockengeometrie und zu der dritten Nockengeometrie abweichend gestaltet und dazu ausgebildet einen Nullhub an dem jeweiligen Einlassventil 14, 16 zu bewirken, d.h. es handelt sich bei dem zweiten Betätigungsnocken 32 jeweils um einen Nullhubnocken.

An dem ersten Zylinder 12a und dem vierten Zylinder 12d ist jeweils dem ersten Auslassventil 14 ein einzelner Betätigungsnocken 36 zugeordnet, welcher drehfest und verschiebefest mit der Einlassnockenwelle 22 verbunden ist.

Den Auslassventilen 18, 20 sämtlicher Zylinder 12a, 12b, 12c, 12d sind in dem gezeigten Ausführungsbeispiel jeweils gegenüber der Auslassnockenwelle 24 einzelne, hier nicht verschiebbare AV-Betätigungsnocken 38 zugeordnet. Allerdings kommt es auf diese Gestaltung der AV-Betätigungsnocken 38 nicht an, d.h. die Auslassnockenwelle 24 kann bedarfsweise - weitestgehend beliebig - modifiziert werden, beispielsweise indem auch im Bereich der Auslassnockenwelle 24 teilweise oder für jedes Auslassventil 18, 20 Ventiltriebverstellvorrichtungen 40 vorgesehen und/oder indem einzelnen oder allen Auslassventilen 18, 20 mehrere Betätigungsnocken zugeordnet werden.

Der erste Betätigungsnocken 30, der zweite Betätigungsnocken 32 und der dritte Betätigungsnocken 34 können bedarfsweise mittels einer linken bzw. rechten Ventiltriebverstellvorrichtung 40 in axialer Richtung der Einlassnockenwelle 22 relativ gegenüber dem korrespondierenden ersten Auslassventil 14 bzw. dem korrespondierenden zweiten Auslassventil 16 verschoben werden, um eine bestimmte Nockengeometrie zu aktivieren. Die Ventiltriebverstellvorrichtung 40 umfasst jeweils eine Kulisse 44 und ein Stellglied 42.

Der erste Zylinder 12a und der zweite Zylinder 12b bilden vorliegend eine erste Funktionseinheit 46, wobei die in dieser ersten Funktionseinheit 46 verstellbaren Betätigungsnocken 30, 32, 34 mittels der linken Ventiltriebverstellvorrichtung 40 gemeinsam verstellt werden. Dazu sind die dem ersten Auslassventil 14 zugeordneten Betätigungsnocken 30, 32, 34 des ersten Zylinders 12a mit den dem ersten Auslassventil 14 und dem zweiten Auslassventil 16 des zweiten Zylinders 12b zugeordneten Betätigungsnocken 30, 32, 34 funktional gekoppelt bzw. einstückig hergestellt. Dies ist in Fig. 1 schematisch durch die beiden zumindest funktional miteinander gekoppelten Schiebeelemente 50 dargestellt. Diese können auch einstückig - ggf. auch gemeinsam mit den zugehörigen Betätigungsnocken 30, 32, 34 - ausgebildet sein.

Der dritte Zylinder 12c und der vierte Zylinder 12d bilden eine zweite Funktionseinheit 48, wobei die in dieser zweiten Funktionseinheit 48 verstellbaren Betätigungsnocken 30, 32, 34 analog zu der oben beschriebenen ersten Funktionseinheit 46 ausgebildet sind und mittels der rechten Ventiltriebverstellvorrichtung 40 gemeinsam verstellt werden. Dies ist in Fig. 1 schematisch durch die zumindest funktional miteinander gekoppelten Schiebeelemente 52 dargestellt. Diese können auch einstückig - ggf. auch gemeinsam mit den Betätigungsnocken 30, 32, 34 - ausgebildet sein.

Insgesamt weist die Brennkraftmaschine 10 damit nur zwei Ventiltriebverstellvorrichtungen 40 auf. Die Ventiltriebverstellvorrichtungen 40 sind jeweils zwischen den zwei zu einer Funktionseinheit 46, 48 gehörenden Zylindern 12a, 12b bzw. 12c, 12d angeordnet.

Die Anordnung der verschiebbaren Betätigungsnocken 30, 32, 34 und des einzelnen Betätigungsnockens 36 der ersten Funktionseinheit 46 ist hier spiegelbildlich zu der Anordnung der verschiebbaren Betätigungsnocken 30, 32, 34 und des einzelnen Betätigungsnockens 36 der zweiten Funktionseinheit 48, wobei eine gedachte Spiegelachse senkrecht zur Axialrichtung der Einlassnockenwelle 22 verläuft. Wie durch die Pfeile D angedeutet, ist ebenfalls die Gängigkeit der wendelförmig ausgebildeten Drallkanäle gespiegelt.

In der in Figur 1 gezeigten Stellung der Betätigungsnocken 30, 32, 34 ist jeweils der zweite Betätigungsnocken 32 (Nullhubnocken) aktiviert. In diesem Zustand sind der zweite Zylinder 12b und der dritte Zylinder 12c abgeschaltet, d.h. der jeweilige Füllungskanal und Drallkanal sind deaktiviert und öffnet damit temporär nicht. An dem ersten Zylinder 12a und dem vierten Zylinder 12d sind die ersten Einlassventile 14 und damit die Füllungskanäle deaktiviert. Zuluft kann daher in den ersten Zylinder 12a und den vierten Zylinder 12d nur über die dem zweiten Einlassventil 16 zugeordneten Drallkanäle einströmen. Dadurch ergibt sich in dem noch aktiven ersten Zylinder 12a und vierten Zylinder 12d eine Drallerhöhung, die zu einer besseren Durchmischung des Kraftstoffes und der zugeführten Zuluft in diesen Zylindern 12a, 12d führt.

Mittels der Ventiltriebverstellvorrichtungen 40 können die verstellbaren Betätigungsnocken 30, 32, 34 ausgehend von der in der Figur 1 dargestellten Stellung verschoben werden, so dass beispielsweise der erste Betätigungsnocken 30 mit der ersten Nockengeometrie oder der dritte Betätigungsnocken 34 mit der zu der ersten Nockengeometrie identischen dritten Nockengeometrie aktiv ist. In diesem Fall sind dann sämtliche Zylinder 12a, 12b, 12c, 12d aktiv und keiner der Zylinder 12a, 12b, 12c, 12d abgeschaltet.

Zusammenfassend lassen sich mit einer erfindungsgemäßen Brennkraftmaschine insbesondere folgende Betriebsarten realisieren:
1. 4-Zylinderbetrieb mit normaler Durchströmung der Drallkanäle und Füllkanäle (normaler Drall),
2. Erhöhter Drall im ersten Zylinder 12a und im vierten Zylinder 12d sowie Abschaltung des zweiten Zylinders 12b und des dritten Zylinders 12c.

Der Betrieb mit zwei Zylindern eignet sich insbesondere für den Teillastbetrieb zur Steigerung der Abgastemperatur. Die aktiven und befeuerten Zylinder profitieren in diesem Fall von dem erhöhten Drallniveau.

Optional kann auslassseitig ergänzend eine Zylinderabschaltung mittels eines Hubumschalters erfolgen.

Die in der vorliegenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

Insbesondere wird vollumfänglich auf die Offenbarung der DE 10 2017 207 917.7 verwiesen. Die Erfindung ist auch als Weiterentwicklung der in diesem Dokument beschriebenen Brennkraftmaschine zu sehen. Insoweit wird auf alle in diesem Dokument beschriebenen Merkmale, auch wenn sie in dieser Anmeldung nicht gezeigt oder beschrieben sind, explizit Bezug genommen.

### Bezugszeichenliste

- 10: Brennkraftmaschine
- 12a, 12b, 12c. 12d: Zylinder
- 14: erstes Einlassventil
- 16: zweites Einlassventil
- 18: erstes Auslassventil
- 20: zweites Auslassventil
- 22: Einlassnockenwelle
- 24: Auslassnockenwelle
- 26: Antriebsrad
- 28: Koppelrad
- 30: erster Betätigungsnocken
- 32: zweiter Betätigungsnocken
- 34: dritter Betätigungsnocken
- 36: einzelner EV-Betätigungsnocken
- 38: einzelner AV-Betätigungsnocken
- 40: Ventiltriebverstellvorrichtung
- 42: Stellglied
- 44: Kulisse
- 46: erste Funktionseinheit
- 48: zweite Funktionseinheit
- 50: Schiebeelement
- 52: Schiebeelement

## Patentansprüche

1. Brennkraftmaschine mit vier Zylindern (12a, 12b, 12c, 12d), wobei jeder Zylinder (12a, 12b, 12c, 12d) ein erstes Einlassventil (14) und mindestens ein zweites Einlassventil (16) aufweist, wobei zur Betätigung der ersten Einlassventile (14) und der mindestens zweiten Einlassventile (16) eine Einlassnockenwelle (22) mit den Einlassventilen (14, 16) zugeordneten Betätigungsnocken (30, 32, 34) vorgesehen ist, wobei jedem ersten Einlassventil (14) ein erster Betätigungsnocken (30) mit einer ersten Nockengeometrie und ein zweiter Betätigungsnocken (32) mit einer zweiten Nockengeometrie zugeordnet ist, wobei sich die erste Nockengeometrie und die zweite Nockengeometrie zumindest über einen Teil ihres Umfangs voneinander unterscheiden, wobei der erste Betätigungsnocken (30) und der zweite Betätigungsnocken (32) bedarfsweise mittels mindestens einer Ventiltriebverstellvorrichtung (40) durch relatives Verschieben gegenüber dem zugeordneten ersten Einlassventil (14) in Axialrichtung der Einlassnockenwelle (22) zur Betätigung des jeweiligen ersten Einlassventils (14) aktivierbar sind und wobei an mindestens einem Zylinder (12b, 12c) dem zweiten Einlassventil (16) ein erster Betätigungsnocken (30) mit einer ersten Nockengeometrie und ein zweiter Betätigungsnocken (32) mit einer zweiten Nockengeometrie zugeordnet ist, wobei sich die erste Nockengeometrie und die zweite Nockengeometrie zumindest über einen Teil ihres Umfangs voneinander unterscheiden, wobei der erste Betätigungsnocken (30) und der zweite Betätigungsnocken (32) bedarfsweise mittels mindestens einer Ventiltriebverstellvorrichtung (40) durch relatives Verschieben gegenüber dem zugeordneten zweiten Einlassventil (16) in Axialrichtung der Einlassnockenwelle (22) zur Betätigung des zweiten Einlassventils (16) aktivierbar sind, wobei
a) an genau zwei Zylindern (12b, 12c) dem zweiten Einlassventil (16) ein erster Betätigungsnocken (30) mit einer ersten Nockengeometrie und ein zweiter Betätigungsnocken (32) mit einer zweiten Nockengeometrie zugeordnet ist
und
b) an genau zwei Zylindern (12a, 12d) dem zweiten Einlassventil (16) jeweils nur ein einzelner Betätigungsnocken (36) zugeordnet ist,
wobei die zweite Nockengeometrie des zweiten Betätigungsnockens (32) derart gestaltet ist, dass bei einer Aktivierung des zweiten Betätigungsnockens (32) dieser einen Nullhub an dem korrespondierenden Einlassventil (14, 16) bewirkt und wobei die ersten Einlassventile (14) jeweils einem Füllungskanal zugeordnet sind und die zweiten Einlassventile (16) jeweils einem Drallkanal zugeordnet sind.

2. Brennkraftmaschine nach dem vorstehenden Anspruch, **dadurch gekennzeichnet, dass** die benachbarten Einlassventile (14, 16) zweier Zylinder (12a, 12b, 12c, 12d) mittels einer gemeinsam genutzten Ventiltriebverstellvorrichtung (40) verstellbar sind.

3. Brennkraftmaschine nach einem der vorstehenden Ansprüche, **dadurch gekennzeichnet, dass** an zwei Zylindern (12b, 12c), welche sowohl für das erste Einlassventil (14) einen verstellbaren Betätigungsnocken (30, 32, 34) als auch für das zweite Einlassventil (16) einen verstellbaren Betätigungsnocken (30, 32, 34) aufweisen, die Betätigungsnocken (30, 32, 34) für das erste Einlassventil (14) und das zweite Einlassventil (16) derart gekoppelt sind, dass die Betätigungsnocken (30, 32, 34) mittels einer gemeinsam genutzten Ventiltriebverstellvorrichtung (40) in Axialrichtung der Einlassnockenwelle (22) verschiebbar sind.

4. Brennkraftmaschine nach einem der vorstehenden Ansprüche, **dadurch gekennzeichnet, dass** die vier Zylinder (12a, 12b, 12c, 12d) in einer Zylinderreihe angeordnet sind, wobei der erste Zylinder (12a) und der zweite Zylinder (12b) eine erste Funktionseinheit (46) bilden und wobei der dritte Zylinder (12c) und der vierte Zylinder (12d) eine zweite Funktionseinheit (48) bilden, wobei die Anordnung der verschiebbaren Betätigungsnocken (30, 32, 34) und des einzelnen Betätigungsnockens (36) der ersten Funktionseinheit (46) spiegelbildlich zu der Anordnung der verschiebbaren Betätigungsnocken (30, 32, 34) und des einzelnen Betätigungsnockens (36) der zweiten Funktionseinheit (48) ist.

5. Brennkraftmaschine nach einem der vorstehenden Ansprüche, **dadurch gekennzeichnet, dass** mindestens einem ersten Einlassventil (14) und/oder einem zweiten Einlassventil (16) ein dritter Betätigungsnocken (34) mit einer dritten Nockengeometrie zugeordnet ist.

6. Brennkraftmaschine nach einem der vorstehenden Ansprüche, **dadurch gekennzeichnet, dass** für mindestens einen Zylinder (12a, 12b, 12c, 12d) der diesem Zylinder (12a, 12b, 12c, 12d) zugeordnete Drallkanal und der diesem Zylinder (12a, 12b, 12c, 12d) zugeordnete Füllungskanal unmittelbar ausgehend von einem Saugrohr als separate Kanäle ausgebildet sind oder dass der zugeordnete Drallkanal und der zugeordnete Füllungskanal ausgehend von dem Saugrohr als gemeinsamer Kanal ausgebildet sind und stromabwärts des Saugrohrs in separate Kanäle abzweigen.

7. Verfahren zum Betreiben einer Brennkraftmaschine (10) nach einem der vorstehenden Ansprüche 1 bis 6, **dadurch gekennzeichnet, dass** das erste Einlassventil (14) mindestens eines Zylinders (12a, 12d) und das erste Einlassventil (14) und das zweite Einlassventil (16) mindestens einen anderen Zylinders (12c, 12d) zumindest in bestimmten Betriebsphasen der Brennkraftmaschine (10) geschlossen werden.

## Claims

1. Internal combustion engine having four cylinders (12a, 12b, 12c, 12d), wherein each cylinder (12a, 12b, 12c, 12d) has a first inlet valve (14) and at least one second inlet valve (16), wherein an inlet camshaft (22) having actuating cams (30, 32, 34) associated with the inlet valves (14, 16) is provided for actuating the first inlet valves (14) and the at least second inlet valves (16), wherein each first inlet valve (14) is associated with a first actuating cam (30) having a first cam geometry and a second actuating cam (32) having a second cam geometry, wherein the first cam geometry and the second cam geometry differ from one another at least over a portion of their periphery, wherein the first actuating cam (30) and the second actuating cam (32) can be activated, if necessary, by means of at least one valve train adjusting device (40) by a relative displacement with respect to the associated first inlet valve (14) in the axial direction of the inlet camshaft (22) in order to actuate the relevant first inlet valve (14), and wherein at at least one cylinder (12b, 12c), the second inlet valve (16) is associated with a first actuating cam (30) having a first cam geometry and a second actuating cam (32) having a second cam geometry, wherein the first cam geometry and the second cam geometry differ from one another at least over a portion of their periphery, wherein the first actuating cam (30) and the second actuating cam (32) can be activated, if necessary, by means of at least one valve train adjusting device (40) by the relative displacement with respect to the associated second inlet valve (16) in the axial direction of the inlet camshaft (22) in order to actuate the second inlet valve (16), wherein
a) at exactly two cylinders (12b, 12c), the second inlet valve (16) is associated with a first actuating cam (30) having a first cam geometry and a second actuating cam (32) having a second cam geometry
and
b) at exactly two cylinders (12a, 12d), the second inlet valve (16) is associated with only one individual actuating cam (36) in each case,
wherein the second cam geometry of the second actuating cam (32) is designed such that, when the second actuating cam (32) is activated, it causes a zero stroke on the corresponding inlet valve (14, 16) and wherein the first inlet valves (14) are each associated with a filling duct and the second inlet valves (16) are each associated with a swirl duct.

2. Internal combustion engine according to the preceding claim,
**characterized in that** the adjacent inlet valves (14, 16) of two cylinders (12a, 12b, 12c, 12d) are adjustable by means of a jointly used valve train adjusting device (40).

3. Internal combustion engine according to either of the preceding claims, **characterized in that** at two cylinders (12b, 12c), which have an adjustable actuating cam (30, 32, 34) for the first inlet valve (14) and an adjustable actuating cam (30, 32, 34) for the second inlet valve (16), the actuating cams (30, 32, 34) for the first inlet valve (14) and the second inlet valve (16) are coupled such that the actuating cams (30, 32, 34) are displaceable in the axial direction of the inlet camshaft (22) by means of a commonly used valve train adjusting device (40).

4. Internal combustion engine according to any of the preceding claims, **characterized in that** the four cylinders (12a, 12b, 12c, 12d) are arranged in a row of cylinders, the first cylinder (12a) and the second cylinder (12b) forming a first functional unit (46) and the third cylinder (12c) and the fourth cylinder (12d) forming a second functional unit (48), the arrangement of the displaceable actuating cams (30, 32, 34) and the individual actuating cam (36) of the first functional unit (46) being mirror-image symmetrical with respect to the arrangement of the displaceable actuating cams (30, 32, 34) and the individual actuating cam (36) of the second functional unit (48).

5. Internal combustion engine according to any of the preceding claims, **characterized in that** a third actuating cam (34) having a third cam geometry is associated with at least one first inlet valve (14) and/or one second inlet valve (16).

6. Internal combustion engine according to any of the preceding claims, **characterized in that** for at least one cylinder (12a, 12b, 12c, 12d) the swirl duct associated with this cylinder (12a, 12b, 12c, 12d) and the filling duct associated with this cylinder (12a, 12b, 12c, 12d) are formed directly starting from a suction pipe as separate ducts or **in that** the associated swirl duct and the associated filling duct are formed starting from the suction pipe as a common duct and branch into separate ducts downstream of the suction pipe.

7. Method for operating an internal combustion engine (10) according to any of the preceding claims 1 to 6, **characterized in that** the first inlet valve (14) of at least one cylinder (12a, 12d) and the first inlet valve (14) and the second inlet valve (16) of at least one other cylinder (12c, 12d) are closed at least in certain operating phases of the internal combustion engine (10).

## Revendications

1. Moteur à combustion interne comportant quatre cylindres (12a, 12b, 12c, 12d), dans lequel chaque cylindre (12a, 12b, 12c, 12d) présente une première soupape d'admission (14) et au moins une seconde soupape d'admission (16), dans lequel, pour l'actionnement de la première soupape d'admission (14) et de l'au moins une seconde soupape d'admission (16), un arbre à cames d'admission (22) comportant des cames d'actionnement (30, 32, 34) associées aux soupapes d'admission (14, 16) est prévu, dans lequel une première came d'actionnement (30) comportant une première géométrie de came et une deuxième came d'actionnement (32) comportant une deuxième géométrie de came sont associées à chaque première soupape d'admission (14), dans lequel la première géométrie de came et la deuxième géométrie de came diffèrent l'une de l'autre au moins sur une partie de leur périphérie, dans lequel la première came d'actionnement (30) et la deuxième came d'actionnement (32) peuvent être activées selon les besoins au moyen d'au moins un dispositif de réglage de commande de soupape (40) par le biais d'un déplacement relatif par rapport à la première soupape d'admission (14) associée dans la direction axiale de l'arbre à cames d'admission (22) pour l'actionnement de la première soupape d'admission (14) respective et dans lequel, au niveau d'au moins un cylindre (12b, 12c), une première came d'actionnement (30) comportant une première géométrie de came et une deuxième came d'actionnement (32) comportant une deuxième géométrie de came sont associées à la seconde soupape d'admission (16), dans lequel la première géométrie de came et la deuxième géométrie de came diffèrent l'une de l'autre au moins sur une partie de leur périphérie, dans lequel la première came d'actionnement (30) et la deuxième came d'actionnement (32) peuvent être activées selon les besoins au moyen d'au moins un dispositif de réglage de commande de soupape (40) par le biais d'un déplacement relatif par rapport à la seconde soupape d'admission (16) associée dans la direction axiale de l'arbre à cames d'admission (22) pour l'actionnement de la seconde soupape d'admission (16), dans lequel
a) au niveau d'exactement deux cylindres (12b, 12c), une première came d'actionnement (30) comportant une première géométrie de came et une deuxième came d'actionnement (32) comportant une deuxième géométrie de came sont associées à la seconde soupape d'admission (16)
et
b) au niveau d'exactement deux cylindres (12a, 12d), seule une came d'actionnement (36) unique est respectivement associée à la seconde soupape d'admission (16),
dans lequel la deuxième géométrie de came de la deuxième came d'actionnement (32) est conçue de telle sorte que, lors d'une activation de la deuxième came d'actionnement (32), celle-ci provoque une course nulle au niveau de la soupape d'admission (14, 16) correspondante et dans lequel les premières soupapes d'admission (14) sont respectivement associées à un canal de remplissage et les secondes soupapes d'admission (16) sont respectivement associées à un canal de tourbillonnement.

2. Moteur à combustion interne selon la revendication précédente, **caractérisé en ce que** les soupapes d'admission (14, 16) adjacentes de deux cylindres (12a, 12b, 12c, 12d) sont réglables au moyen d'un dispositif de réglage de commande de soupape (40) partagé.

3. Moteur à combustion interne selon l'une des revendications précédentes, **caractérisé en ce que,** au niveau de deux cylindres (12b, 12c), lesquels présentent à la fois une came d'actionnement (30, 32, 34) réglable pour la première soupape d'admission (14) et une came d'actionnement (30, 32, 34) réglable pour la seconde soupape d'admission (16), les cames d'actionnement (30, 32, 34) pour la première soupape d'admission (14) et la seconde soupape d'admission (16) sont accouplées de telle sorte que les cames d'actionnement (30, 32, 34) peuvent être déplacées au moyen d'un dispositif de réglage de commande de soupape (40) partagé dans la direction axiale de l'arbre à cames d'admission (22).

4. Moteur à combustion interne selon l'une des revendications précédentes, **caractérisé en ce que** les quatre cylindres (12a, 12b, 12c, 12d) sont agencés dans une rangée de cylindres, dans lequel le premier cylindre (12a) et le deuxième cylindre (12b) forment une première unité fonctionnelle (46) et dans lequel le troisième cylindre (12c) et le quatrième cylindre (12d) forment une seconde unité fonctionnelle (48), dans lequel l'agencement des cames d'actionnement (30, 32, 34) déplaçables et de la came d'actionnement (36) unique de la première unité fonctionnelle (46) est conçu en miroir par rapport à l'agencement des cames d'actionnement (30, 32, 34) déplaçables et de la came d'actionnement (36) unique de la seconde unité fonctionnelle (48).

5. Moteur à combustion interne selon l'une des revendications précédentes, **caractérisé en ce qu'**une troisième came d'actionnement (34) comportant une troisième géométrie de came est associée à au moins une première soupape d'admission (14) et/ou une seconde soupape d'admission (16).

6. Moteur à combustion interne selon l'une des revendications précédentes, **caractérisé en ce que,** pour au moins un cylindre (12a, 12b, 12c, 12d), le canal de tourbillonnement associé audit cylindre (12a, 12b, 12c, 12d) et le canal de remplissage associé audit cylindre (12a, 12b, 12c, 12d) sont formés immédiatement à partir d'un tube d'aspiration en tant que canaux indépendants **ou en ce que** le canal de tourbillonnement associé et le canal de remplissage associé sont formés à partir du tube d'aspiration en tant que canal commun et ramifiés en aval du tube d'aspiration en canaux indépendants.

7. Procédé permettant de faire fonctionner un moteur à combustion interne (10) selon l'une des revendications 1 à 6 précédentes, **caractérisé en ce que** la première soupape d'admission (14) d'au moins un cylindre (12a, 12d) et la première soupape d'admission (14) et la seconde soupape d'admission (16) d'au moins un autre cylindre (12c, 12d) sont fermées au moins dans des phases de fonctionnement déterminées du moteur à combustion interne (10).
